# EUROPEAN PATENT APPLICATION

(11) **EP 1 174 806 A1**
(43) Date of publication of application: **23.01.2002**
(21) Application number: 00500163.1
(22) Date of filing: 21.07.2000
(51) Int. Cl.: G06F 17/60, G06F 17/30

(54) **Professional teleconsulting method and system**

(71) Applicant: Investigacion, Informatica Y Communicationes, S.L., 28223 Pozuelo de Alarcon Madrid (ES)
(72) Inventor: Martinez Vázquez, Dario, 28223 Pozuelo de Alarcon, Madrid (ES)
(74) Representative: Gonzalez Gomez, Maria de las Virtudes

(57) **Abstract**

The system consists of a server composed of a computer, specific programmes, archive and connection to a communications network such as Internet and a set of computers with capacity to be connected to the same network.

The method is characterised in that a user makes the query application by accessing the server through the network from his/her computer and creating a file with the addressees, the application and the multimedia information destined to them. The server, by means of a specific computer programme, stores the file in its archive and successively informs the addressees of the application. These, through the mentioned network, access the server and review the documentation directed to them and contribute to the file their reply consisting of new multimedia documents. Once the process has finished, the server informs the applicant and allows him/her to use the file.

## Description

The present invention refers to a system and method to carry out queries between independent professionals, based on a computer server to be accessed through Internet for the applicants and addressees of the queries, housing the query files created by the applicants and extended with the contributions of the consultants, and always looking after the correct execution of the consulting process, to finally deliver the applicant the file with the results thereof.

Currently, when a customer consults a professional or when a professional requires advice from another professional, especially when reference documents should be contributed to the consultant, conventional or electronic message services are usually resorted to, followed by a telephone conversation or a visit. These same services are also used for the later return to the applicant of the documentation previously sent, together with that produced by the consultant. This process should be successively repeated as many times as necessary according to the queries. But these procedures, similar to others that may alternatively be used for the same purpose, present a series of drawbacks among which we may mention the loss of original documents, the risk that said documents suffer unintended or intended changes, the difficulty of making multiple enquiries to several professionals at the same time (in series or in parallel), the barriers involved in great distances between the enquirer and the consultant or the long time intervals required, among others.

The teleconsulting system and method for professionals object of this invention, practically solves all these problems, as may be seen from the description of both contributed in a later section of this specification.

### BACKGROUND OF THE INVENTION

This includes the following:
a) Direct queries in which the enquirer visits the professional consultant
b) Queries through conventional messenger services.
c) Queries through electronic mail.
d) Queries using shared work spaces.
e) Medical interconsulting in telemedicine systems.

### DESCRIPTION OF THE INVENTION

The invention includes a system and method to make queries between professionals.

The professional teleconsulting system is basically characterised in that it provides the resources for a person without more means than a computer connected to a communications network like Internet to be able to make a query to another or various persons, providing them with an electronic file with the multimedia documents considered relevant, permitting them to review them and add other documents and finally recovering the file with the documentation introduced on starting the query together with that added by the consulted persons. For the latter, the system object of the invention consists of the following components:
1st. A server composed of:
   a) A computer with its operative system (6);
   b) A set of specific programmes (7) for user management (10), access control (11), query application (12), query management (13), query reply (14) and communications (15);
   c) A query file archive (8);
   d) A server connection (9) to the telecommunications network by means of protocols usable by all the potential network users to connect to it (for example, those used in the Internet).
2nd. A communications network (for example, Internet) (2).
3rd. A set of computers (3), (4), (5), with which any previously authorised user may access the server to apply for and answer queries from different places, provided he/she has the usual means to use said network (like, for example, a computer with a navigator and connected to the network).

Now referring to the professional teleconsulting method, it is basically characterised in that it consists of the following stages:
1st. The person wishing to make a query accesses the server (1) through any communication network (2) (for example, Internet) using for such a purpose the normal means (3) to access said networks (for example, a personal computer with a navigator programme); the server verifies his/her authorisation and if authorised, contributes the means to make the enquiry.
2nd. To make the enquiry the server provides him/her a form with which the user creates a query file within the server, which includes information on whom are the addressees of the enquiry, expressing the order in which they should be consulted as well as other conditions to be established for a correct execution of the enquiry process and includes in the file all the information considered relevant for each addressee.
3rd. The server stores the file in each archive, where it will remain until the end of the enquiry. Then the same server successively warns the addressees that they have an enquiry application.
4th. Each addressee may access the server when he/she wishes, through any communications network (like Internet), using general purpose means (like a personal computer provided with a navigator).
5th.- When the server has opened the access to an addressee of the query, he/she is informed of the pending enquiries, permitting the addressee to access to the information each file has destined to the addressee and provides the means to answer them successively. For this purpose, he/she is only allowed to perform the set of actions pre-established by the applicant, normally including the addition of documents to the corresponding file without being able to delete, modify, nor copy documents not belonging to him/her. Also means are provided helping him/her in his/her activity, like complementary access services to bibliographic databases, treatment of images and other services rendered by the same server or other available servers on the network. Finally, it electronically signs his/her contribution and closes the file.
6th.- When all the addressees have answered the query or when another condition pre-determined by the applicant has been fulfilled (like the expiry of the term for each addressee or for the set), then the server informs the applicant of the termination of the enquiry process and when he/she connects, allows him/her to collect all the file documents created by it, including the documents added by the enquiry addressees. They may then be deleted or transferred to his/her own computer or any other filing system, hence finishing the enquiry.

### FIELD OF APPLICATION

The invention may be applied by independent professionals (doctors, lawyers, psychologists, architects, engineers, consultants, managers, etc.), both for interconsulting between different professionals and to receive and answer customers' queries. The professionals, potentially users of the invention, are those having the following common characteristics:
1.- They comprise associations or very small groups which in most cases are limited to one or two professionals with a reduced administrative support.
2.- In most cases, their specialisation obliges them to request specific opinions from other professionals on fields of their activity not covered by them.
3.- To obtain such opinions, they need to provide the consulted professionals with a plurality of confidential documents of great importance since the documents are originals with a great risk of loss.
4.- Generally their turnover does not merit the possession of own complex computerised resources.
5.- The main part of their interaction with colleagues and customers consist of successive information exchange (text, voice, images, graphics, video, etc.) which may be represented and transferred in a digital format.

### ADVANTAGES OF THE INVENTION

The proposed invention provides independent professionals with advanced enquiry and information exchange means thanks to the diffusion of Internet, without needing to have neither personnel nor complex computer equipment.

The specific advantages of the invention over alternative enquiry methods are indicated below:
a) Advantages over direct query where the applicant visits the consultant:
   - Requires less time, permitting optimisation by the consultant of the time dedicated to the opinion required.
   - Less expenses.
   - Does not require displacements.
   - Immediately permits the availability of the documentation necessary for the report independently from the distance.
   - Prevents losses of documentation during its transportation.
   - Prevents the non-authorised reproduction of the supplied documentation.
   - Permits the simultaneous enquiry to several professionals using the same documentation.
b) Advantages over queries through conventional messenger services:
   - Requires less time.
   - Less expenses.
   - Immediately permits the availability of the documentation necessary for the report independent from the distance.
   - Prevents losses of documentation during its transportation.
   - Prevents the non-authorised reproduction of the supplied documentation.
   - Guarantees the integrity of the documentation made available to the consultants.
   - Permits the simultaneous enquiry to several professionals using the same documentation.
c) Advantages over electronic mail (e-mail):
   - A same enquiry may be directed to multiple addressees, so that they may answer in order or under conditions predetermined and controlled by the applicant.
   - Prevents the risk of loss of documentation, since the document is always kept in the server with total security.
   - Controls modifications a user may make over the documentation provided for the enquiry.
   - Assures the integrity of the documents deposited in the query file.
   - Prevents the non-authorised reproduction of the supplied documentation.
d) Advantages over BSCW type shared work spaces:
   - In queries to multiple addressees, it supervises that each one accesses the documentation in the order established by the applicant.
   - It is provided with a specific structure for each professional environment.
   - It prevents the non-authorised reproduction of the supplied documentation.
e) Advantages over medical consulting in telemedicine systems:
   - It requires neither the applicant nor the consultants to have a clinical case file.
   - It does not require the installation of specific query programmes in the user's computer.

### BRIEF DESCRIPTION OF THE DRAWINGS

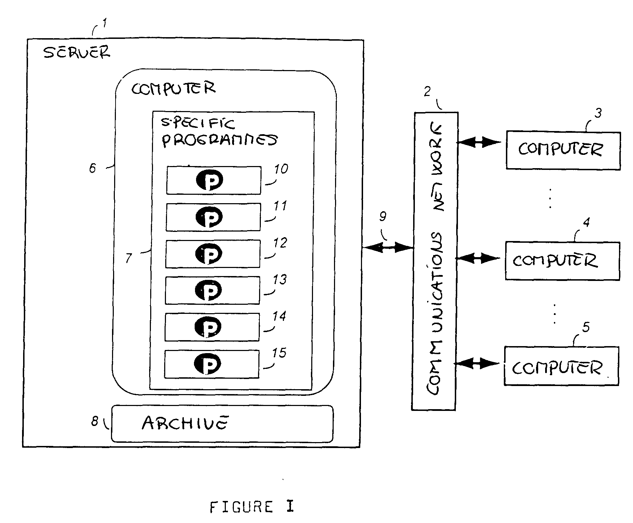

To better understand everything described in the present specification, some drawings are attached for illustrative and non-limiting purposes, to represent a practical embodiment case of the teleconsulting system for professionals. Figure 1 schematically represents the system components, the latter being the server (1), the Internet telecommunications network (2), and a set of three computers (3), (4) and (5), representing the multiple computers employed by the different users to access Internet. In turn the server consists of the following main components: a computer (6), specific programmes (7), archive (8) and connection to the Internet telecommunications network (9); among the specific server programmes, the following have been indicated: user management (10), access control (11), query application (12), query management (13), query reply (14) and communications (15).

### DESCRIPTION OF A PREFERRED EMBODIMENT

To carry out the detailed description of the preferred embodiment of the invention, for reasons of clarity, a simple embodiment has been chosen intended for lawyers, describing the system and method object of the invention below.

The teleconsulting system for lawyers comprises:
a) A teleconsulting server (1), consisting of an Internet server with permanent communication to said network;
b) A set of three user computers (3), (4), (5) with their respective general purpose programmes for access to Internet, representing the multiple office computers located in the offices of lawyers using the system;
c) A telecommunications network (2), specifically Internet.

These three teleconsulting system components for lawyers are described in more detail below.
A) The teleconsulting server (1) of this embodiment consists of the following means:
   1) Computer with its operative system (6)
   2) Specific programmes (7) including the following:
      a) User management programme (10), to admit or release authorised users, as well as to establish the authorised actions for each one of them; record the activity executed, bill and collect and other services;
      b) Access control programme (11), permitting access to the server to make enquiries only to authorised lawyers and permitting a query to be only answered by the real addressees thereof;
      c) Query application programme (12), to permit any authorised lawyer to create a file using a form with the structure and terminology normally used in this profession, assigning him/her a list of addressees (ordered in series, in parallel or in any other type of order), and including in it the formulation of the query desired for each addressee, the documents that each addressee may review (included by the applicant or by the addressees that had previously answered the query) and the maximum time period the server may wait to receive the reply from each addressee;
      d) Query management programme (13) to assure that all the operations demanded to execute an enquiry are made correctly in the relevant order and time;
      e) An enquiry reply programme (14), to inform each consulted lawyer that he/she has a pending query; permitting him/her to review the documentation destined to him/her (and only him/her), and providing the means to contribute his/her own report, and even additional documentation, that will be added to the file created by the applicant. This programme will assure that at all times, the operations to be made by the consultant are only those predetermined by the applicant, taking special care that a consultant cannot change documents contributed by the applicant or other consultants.
      f) Communications programme (15) to permit the server to chat with the lawyers' computers and other services, specifically those of electronic certification; generate, direct and transmit messages to the lawyers, addressees of a query, using for such a purpose, electronic or conventional mail, telephone, fax or any other method; to pay the service to the consultants; to guarantee the security and confidentiality of the received and transmitted information and to permit access to external servers and other functionalities that each specific application may require.
   3) File (8) consisting of a multimedia database management system and a re-recordable optic disc jukebox destined to store the query files.
   4) Connection to the Internet network (9), with the bandwidth necessary to permit a flexible relation between the server and the multiple users that may connect simultaneously.
B) The user's computer (3), (4) or (5) used by the professional to make a query and to answer it when another so requires, consists of a personal computer, with access to the Internet network and provided with any of the Internet navigators available in the market. It should be mentioned that in the users' computers no specific programme is necessary to make the queries, although their use is not excluded.
C) The communications network (2) used in this embodiment is the Internet network, although an intranet, extranet or any other public or private telecommunications network to which the system users have access may be used.

The professional teleconsulting method that a lawyer will use to make an enquiry to one or several colleagues or collaborators, consists of the following steps:
a) Access to the server.
b) Creation of the query file.
c) Application management by the server.
d) Server access of each query addressee.
e) Reply to the received query application.
f) Collection of the query file by the applicant.

These steps comprising the teleconsulting method for lawyers are described in greater detail below:
A) Access to the server by the lawyer wishing to make a query include the following steps: firstly access the server (1) through Internet (2) using his/her personal computer (3). The server checks if he/she is authorised and only if this is the case, provides the means to make a query application.
B) The query file creation includes the following steps: by using the electronic form provided by the server, a new file is created in the latter, indicating who the addressee lawyers for the query are, including in the file the application made to each addressee and copying in the file (located in the server) the documents in his/her own computer and considered relevant for the consultants and specifying the conditions that he/she wants to establish such that each query is transferred to its addressee, which may refer to the order in which the addressees should answer the multiple query, dates, maximum or minimum terms, preliminary review by other addressees, costs, among others.
C) The application management by the server includes the following steps: the server internally saves the query application file. When the conditions pre-established by the applicant for each addressee are fulfilled, it requires from the latter that he/she connects to the server by electronic mail or a telephone call.
D) The access to the server of each query addressee includes the following steps: when he/she wants to reply to the query, he/she accesses the server (1) through Internet (2) using a PC with a navigator (4) or (5); then the server checks if it is the person to whom the enquiry is directed and only if this is the case, provides him/her the means to answer it.
E) The query application reply includes the following steps for each addressee: knowing the application being made; reviewing the file documentation destined to him/her; preparing his/her reply using, if necessary, the means provided by the server, like the access to legal databases and the treatment of images, including them in the query file together with the multimedia documentation he/she wishes to contribute; electronically signing his/her reply and finishing the enquiry,
F) The collection of the query file by the lawyer requesting it includes the following steps: when the all the addressees have answered the query or when any other condition has been fulfilled (like the expiry of the term pre-established by the applicant for each addressee or for the set of consultants), then the server informs the applicant of the termination of the query process following a procedure similar to that used to inform the addressees of the application; and when he/she connects, it will permit him/her to collect all the documents contained in the query file, both those contributed by him/her at the start of the query and those added by all the consultants, it being possible to delete them or transfer them to his/her own computer or any other available archive system.

## Claims

1. The professional teleconsulting system whose object is to provide the means for a person to make a query to another or several people, providing each one of them with the information considered relevant, permitting the query addressees to review said information and to provide their own information as a reply to the query, and finally permitting the applicant to know and have all the information provided by the consultants, said system is **characterised in that** it comprises:
a) A teleconsulting server (1) with its specific programmes to carry out queries.
b) A set of user computers (3) (4) (5) with their respective general purpose programmes and;
c) A telecommunications network (2), through which each one of the user computers may establish communication with the server, hence permitting the users to make enquiries, answer them and obtain the results thereof.

2. The professional teleconsulting system according to claim 1, which is **characterised in that** the server (1) consists of the following means, among others:
a) Computer (6) with its operative system.
b) Specific programmes (7) to carry out queries.
c) File archive (8).
d) Connection to the telecommunications network (9).

3. The professional teleconsulting system according to claims 1 and 2, which is **characterised in that** the specific programmes (7) to carry out queries, comprise the following programmes among others:
a) User management programme (10) to accept or release authorised users, as well as to establish the authorised actions for each one of them when they connect to the server and optionally, to carry a record of the activity, make bills, economic operations and other services.
b) Access control programme (11) to permit queries to be made only to the authorised users and to be answered only by the real addressees thereof.
c) Query application programme (12) to permit any authorised user to create a structured file according to the type of profession, assigning him/her an ordered list of addressees (ordered in series, in parallel or in any type of order), and include in it the formulation of the query to be made to each addressee, the documents that each addressee should review (incorporated by the applicant or by addressees that had previously answered the query), and other operative parameters specified by the applicant.
d) Query management programme (13) to assure that all the operations demanding the execution of a query are made correctly in order and at the right time.
e) Query reply programme (14) to inform the addressee that he/she has a pending enquiry permitting him/her to review the documentation addressed to him/her (and only this one) and provide him/her the means to contribute his/her replies in terms of the multimedia documentation added to the initial file. The programme will always control the operations permitted to be made to the consultant in each case, among which are included those of adding information and which in every case will be only that pre-established as admissible by the applicant;
f) Communications programme (15) to permit the server to chat with the user computers and other services; generate, direct and transmit messages to the addressees of a query, using electronic or conventional mail, telephone, fax or any other means for such a purpose; to make economic transactions; to provide the means to assure the security and confidentiality of the received and transmitted information; to permit access to external servers and other functionalities that each specific application may require.

4. The professional teleconsulting system according to claims 1 and 2, which is **characterised in that** the archive (8) consists of a multimedia database manager together with the corresponding magnetic, optic or other storage system in which the query files are stored.

5. The professional teleconsulting method susceptible of being carried out by using a system such as that defined in the previous claims 1 to 4, which is basically **characterised in that** it comprises the following activities:
a) Access to the server by the query applicant.
b) Creation of the query file by said applicant.
c) Application management by the server.
d) Access to the server by the query addressees.
e) Reply to the query application by each addressee.
f) Collection of the query file with the results thereof by the applicant.

6. The professional teleconsulting method according to claim 5, **characterised in that** the access to the server by the applicant includes the following steps: the person wanting to make a query accesses the server (1) through any communications network (2) (for example, Internet) using the normal means (3), (4), (5) (for example, a personal computer provided with a navigator); the server checks if he/she is authorised and only if this is the case, provides the means to make a query application.

7. The professional teleconsulting method according to claim 5, **characterised in that** the creation of the query file includes the following steps: the authorised person wishing to make a query creates a file in the server indicating the query addressees, including in the file the application made to each addressee, transferring to the file the multimedia documents considered relevant for each addressee and specifying the conditions to be established for the query to be transferred to each one of the addressees, conditions regarding dates, maximum or minimum terms, preliminary review by other addressees and costs, among others.

8. The professional teleconsulting method according to claim 5, **characterised in that** the application management by the server comprises the following activities: the server internally saves the query application file, keeping it complete and unchanged until the end of the query, both the documentation initially introduced by the applicant and that added by the addressees in their replies. When the conditions pre-established by the applicant for each addressee receiving the query application are fulfilled, the applicant requires the latter a means for him/her to connect to the server.

9. The professional teleconsulting method according to claim 5, **characterised in that** the access of each query addressee to the server involves that when the addressee accesses the server (1) through any communications network (2) (for example, Internet) by using the normal means (3), (4), (5) (for example, a personal computer provided with a navigator), the server checks if this person is really the one the applicant has indicated as a query addressee and only if this is the case provides him/her with the means to reply to the query.

10. The professional teleconsulting method according to claim 5, **characterised in that** the reply to the query application includes the following steps: to know the request directed to him/her by the applicant; to review the file documents destined to him/her; to prepare his/her reply using, if necessary, the means provided by the server; to include it in the query file, together with the multimedia documentation he/she wishes to add; to record his/her authorship of the reply by means of an electronic signature or by any other means and to consider the query as finished.

11. The professional teleconsulting method according to claim 5, **characterised in that** the collection of the query file by the applicant includes the following steps: when all the addressees have answered the query or when any other conditions has been fulfilled, like the expiry of the term pre-established by the applicant for each addressee, or for the whole, then the server informs by any means the applicant that the query process has finished. When the applicant connects to the server, the latter permits him/her to collect all the documents contained in the query file, it then being possible to delete or transfer them to his/her own computer or any other storage system.
